# EUROPÄISCHE PATENTSCHRIFT

(11) **EP 3 765 798 B1**
(45) Veröffentlichungstag und Bekanntmachung des Hinweises auf die Patenterteilung: **19.07.2023**
(21) Anmeldenummer: 19708520.2
(22) Anmeldetag: 01.03.2019
(51) Int. Cl.: F24H 1/38, F24H 8/00, F28F 3/04, F28F 13/08, F28D 9/00

(54) **BRENNWERT-WÄRMETAUSCHER**
CONDENSING HEAT EXCHANGER
ÉCHANGEUR DE CHALEUR À CONDENSATION

(30) Priorität: 13.03.2018 DE 102018105739
(43) Veröffentlichungstag der Anmeldung: 20.01.2021
(73) Patentinhaber: Wolf GmbH, 84048 Mainburg (DE)
(72) Erfinder: WALLHOEFER, Andreas, 84032 Landshut (DE); BETZENBICHLER, Christian, 84104 Tegernbach (DE); EDER, Florian, 93326 Abensberg (DE); SCHMID, Thomas, 84048 Mainburg (DE); HERZOG, Fabian, 84048 Mainburg (DE)
(74) Vertreter: Meissner Bolte Partnerschaft mbB
(86) Internationale Anmeldenummer: PCT/EP2019/055182
(87) Internationale Veröffentlichungsnummer: WO 2019/174936

(56) Entgegenhaltungen:
- EP-A1- 2 778 559
- EP-A2- 0 127 939
- WO-A2-2011/117907
- AT-B- 386 676
- CN-A- 1 912 520
- DE-A1- 2 429 623

## Beschreibung

Die Erfindung betrifft einen Brennwert-Wärmetauscher nach dem Oberbegriff von Patentanspruch 1.

Derartige Brennwert-Wärmetauscher werden üblicherweise in Brennwert-Heizgeräten eingesetzt, die vorrangig, aber nicht ausschließlich mit Gas befeuert werden. Die Hauptaufgabe des Brennwert-Wärmetauschers, nachfolgend auch vereinfacht als Wärmetauscher bezeichnet, liegt in der Aufgabe, Wärme aus einer Verbrennung von Brennstoff mittels Strahlung und Konvektion auf Heizwasser zu übertragen. Dabei wird im Brennwertbetrieb gebildetes Abgas unter seine Kondensationstemperatur abgekühlt, wodurch sich im Abgas befindlicher Wasserdampf in flüssiger Form an eine Wärmetauscheroberfläche niederschlägt.

Bekannte Wärmetauscher, wie sie beispielsweise aus der EP 2 778 559 B1 bekannt sind, weisen einen in der Regel einen im oberen Bereich des Wärmetauschers angeordneten Brenner auf, der in einer ausgeformten Brennkammer angebracht ist. In dieser Brennkammer wird mittels einer Verbrennung von Brennstoff erzeugte Strahlungsenergie auf die Wärmetauscheroberfläche übertragen. Nach der Wärmeabgabe über Strahlung wird der heiße Abgasstrom entlang eines Abgasströmungswegs von oben nach unten durch den Wärmetauscher geleitet, wobei an der Wärmetauscheroberfläche Wärme durch Konvektion auf ein Wärmetransfer Medium, in der Regel Heizungswasser, übertragen wird. In aller Regel sind derartige Wärmetauscher aus einer Alugusslegierung hergestellt.

Ein grundsätzliches Problem derartiger bekannter Aluminium-Wärmetauscher, die in Brennwertgeräten betrieben werden, besteht darin, dass aus den Verbrennungsgasen auskondensierendes Kondensat einen sauren pH-Wert aufweist und das Kondensat mit dem Aluminium des Wärmetauschers reagiert, was zur Folge hat, dass die Wärmetauscheroberfläche korrodiert und sich die entstehenden Korrosionsprodukte an der Oberfläche des Wärmetauschers absetzen. Dies führt wiederum dazu, dass der durch den Wärmetauscher führende Abgasweg der Verbrennungsgase mit fortschreitender Korrosion quasi "verstopft" was in der Konsequenz dazu führt, dass die Heizleistung des Brennwert-Wärmetauschers, respektive des Brennwertgeräts, abnimmt. Das Problem ist hierbei umso größer, je länger das Kondensat auf der Oberfläche des Wärmetauschers verweilt, da sich aufgrund der hierbei gegebenen längeren Einwirkzeit des sauren Kondensats auf die Aluminiumlegierung umso schneller Korrosionsprodukte ausbilden.

Ein wesentlicher Nachteil von bekannten Wärmetauschern, wie sie unter anderem beispielsweise auch in der EP 2 778 559 B1 beschrieben sind, besteht maßgeblich in einer schlechten Reinigbarkeit der abgasberührten Wärmetauscheroberfläche des Wärmetauschers. So weist der in der EP 2 778 559 B1 beschriebene Wärmetauscher beispielsweise Rippen auf, auf welchen sich das aus dem Verbrennungsabgas auskondensierende Kondensat sammelt und die Aluminiumoberfläche korrodiert.

Andere herkömmliche Wärmetauscher setzen zur Vergrößerung der Wärmetauscheroberfläche neben Rippen auch Zapfen ein, wobei insbesondere letztere jedoch den Nachteil haben, dass sich Kondensattropfen längere Zeit an und zwischen den Zapfen halten können und damit ebenfalls wiederum Korrosion begünstigen und darüber hinaus auch schwerer als Rippen zu reinigen sind.

Die sich bildenden Korrosionsprodukte verschlechtern den Wärmeübergang vom Abgas zum Heizungswasser und erhöhen den Strömungswiderstand auf der Abgasseite. Daraus resultieren zum einen höhere Abgastemperaturen und zum anderen wird die maximale Leistung des Wärmetauschers, respektive des Brennwertgeräts, nicht mehr erreicht.

Zur Entfernung dieser Ablagerungen werden im Stand der Technik unterschiedliche Verfahren, teils mechanischer, teils chemischer Art empfohlen, wobei beide Reinigungsarten bei herkömmlichen Wärmetauschern nur unzureichend sind. So ist eine wirksame mechanische Reinigung der Wärmetauscheroberfläche nicht ausreichend möglich, da Ablagerungen mit einem flachen Werkzeug, das sich zwischen die Rippen des Wärmetauschers einführen lässt, nicht oder nur sehr unzureichend aus einem, insbesondere nicht teilbaren, Wärmetauscher heraus befördert werden können.

Chemische Verfahren hingegen führen zu einer hohen chemischen Belastung des Abwassers weisen darüber hinaus auch für einen Techniker vor Ort erhebliche Nachteile auf, die zum einen in einer nicht unerheblichen Gesundheitsgefährdung für den Techniker bestehen und zum anderen aufgrund der notwendigen Einwirkzeit der Chemikalien die Arbeitszeit des Technikers in äußerst nachteiliger Weise stark verlängern.

Der Erfindung liegt die Aufgabe zugrunde einen Brennwert-Wärmetauscher zur Verfügung zu stellen, der die oben genannten Nachteile vermeidet, leicht zu reinigen und kostengünstig herzustellen ist und einen gleichbleibend hohen Wirkungsgrad hat.

Diese Aufgabe wird durch einen Brennwert-Wärmetauscher gemäß Patentanspruch 1 gelöst.

Insbesondere wird die Aufgabe durch einen Brennwert-Wärmetauscher mit einem einen Abgasströmungsweg definierenden Gehäuse gelöst, wobei der Abgasströmungsweg entlang eines Innenabschnitts des Gehäuses, insbesondere in im Wesentlichen vertikaler Richtung, verläuft und wobei sich entlang des Abgasströmungswegs und dem Abgasströmungsweg folgend ausgehend von einer Innenwandung des Gehäuses Rippen in den Abgasströmungsweg hinein erstrecken, die im Wesentlichen wellen- und/oder zick-zack-förmig verlaufen.

Ein wesentlicher Punkt der Erfindung liegt hierbei darin, dass die im Inneren des Brennwert-Wärmetauschers angeordneten Rippen gleichsinnig mit dem Abgasströmungsweg verlaufen und somit kein Strömungshindernis darstellen, sondern ein permanentes und gleichmäßiges Ablaufen von Kondensat in Abgasströmungsrichtung nicht nur ermöglichen, sondern aufgrund des in gleicher Richtung strömenden Abgases und nicht zuletzt unter der auf den erfindungsgemäßen Brennwert-Wärmetauscher wirkenden Schwerkraft sogar fördern. Dies ist insofern bemerkenswert, da dieser Schwerkrafteffekt bei senkrecht zu Abgasströmungsrichtung angeordneten Rippen zu einer erhöhten Adhäsion und damit einem erhöhten Reibungswiderstand führt, der umso erheblicher zum Tragen kommt je fortgeschrittener eine durch das saure Kondensat ausgelöste Korrosion an den Rippen ist. Dieser bei bekannten Brennwert-Wärmetauschern auftretende negative Effekt konnte erfindungsgemäß in erstaunlich einfacher Weise dadurch behoben werden, dass die Rippen des Brennwert-Wärmetauschers nicht senkrecht zu Abgasströmungsrichtung, sondern im Wesentlichen parallel zu dieser angeordnet sind.

Gemäß der Erfindung erstrecken sich die im Wesentlichen wellen- und/oder zick-zack-förmig verlaufenden Rippen des erfindungsgemäßen Brennwert-Wärmetauschers im Wesentlichen über die gesamte Länge des Abgasströmungswegs, nämlich insbesondere von einem oben in dem Brennwert-Wärmetauscher angeordneten Brennerabschnitt des Gehäuses bis zu einem unten in dem Brennwert-Wärmetauscher angeordneten Kondensatwannenabschnitt.

Auf diese Weise ist erfindungsgemäß eine maximale Ausnutzung der thermischen Energie des Abgases gewährleistet. Darüber hinaus sind auf diese Weise die oberen und unteren Kanten der Rippen des erfindungsgemäßen Brennwert-Wärmetauschers, auf welchen sich unter Umständen Kondensattröpfchen ablagern oder anhaften könnten, für eine Reinigung leicht erreichbar. Diesbezüglich sei darauf hingewiesen, dass diese oberen und unteren Kanten der Rippen des erfindungsgemäßen Brennwert-Wärmetauschers eine Geometrie aufweisen können, die eine Tropfenauflagerung im Falle der oberen Kante und einen Tropfenabriss im Falle der unteren Kante unwahrscheinlich macht bzw. ganz zu vermeiden hilft. So können diese oberen und unteren Kanten beispielsweise in einer jeweiligen Rundung oder in einer jeweiligen Spitze auslaufen.

In diesem Zusammenhang sei ferner darauf hingewiesen, dass die erfindungsgemäß durchgängigen Rippen des erfindungsgemäßen neuartigen Brennwert-Wärmetauschers auch gegenüber dem Stand der Technik verwendeten Zapfen den wesentlichen Vorteil haben, dass flüssiges Kondensat von den erfindungsgemäß in Abgasströmungsrichtung angeordneten Rippen, anders als von besagten Zapfen, definiert ablaufen und abtropfen kann, wodurch eine Kontaktzeit zwischen Kondensat und Aluminium gering gehalten und dadurch die Korrosion an den Rippen reduziert wird.

Durch die Wellen- und/oder Zick-Zack-Form der durchgängigen Rippen werden ferner in äußerst einfache Weise der effektive Abgasströmungsweg und eine Turbulenz in der Abgasströmung erhöht, wodurch die Effizienz des erfindungsgemäßen Wärmetauschers weiter gesteigert wird.

### Gemäß der Erfindung

ist das Gehäuse des erfindungsgemäßen Brennwert-Wärmetauschers zweiteilig ausgebildet, wobei eine Innenwandung einer ersten Gehäuseseite in montiertem Zustand des Gehäuses einer Innenwandung einer zweiten Gehäuseseite gegenüberliegend angeordnet ist. Eine solche erfindungsgemäße zweiteilige Ausführungsform des erfindungsgemä-ßen Brennwert-Wärmetauschers, bei welchem beide Gehäuseseiten ein Wärmetransfermedium führen, respektive insbesondere wasserführend sind, bringt einen weiteren wichtigen Vorteil der Erfindung, nämlich eine gute Reinigbarkeit der beiden Gehäuseseiten, insbesondere von deren jeweiliger Innenwandung, mit sich. So kann der erfindungsgemäße Brennwert-Wärmetauscher quasi zur Reinigung geöffnet werden, so dass die abgasseitig berührten Flächen des erfindungsgemäßen Brennwert-Wärmetauschers besonders leicht zugänglich und somit auch besonders leicht zu reinigen sind.

Obgleich es in den Schutzumfang der Erfindung fällt, wenn sich die Wellen- und/oder zick-zack-förmig lediglich von einer Innenwand einer Gehäuseseite in den Abgasströmungsweg hinein erstrecken, besteht der Erfindung darin, dass die erste Gehäuseseite erste Rippen und die zweite Gehäuseseite zweite Rippen aufweist, die in montiertem Zustand des Gehäuses, insbesondere zueinander versetzt und vorzugsweise im Wesentlichen parallel zueinander verlaufend, angeordnet sind.

In vorteilhafter Weise kann eine Rippenhöhe, als welche der Abstand eines innenwandungsseitig angeordneten Rippengrunds gegenüber einem entgegengesetzt zum Rippengrund angeordneten Rippenkopf definiert ist, reduziert werden, was wiederum eine Reinigbarkeit der Rippen begünstigt, da sich an einer ersten Gehäuseseite angeordnete erste Rippen und an der zweiten Gehäuseseite angeordnete zweite Rippen jeweils nur über im Wesentlichen die Hälfte des lichten inneren Querschnitts, respektive der lichten inneren Weite, des erfindungsgemäßen Brennwert-Wärmetauschers erstrecken. Auf diese Weise sind die jeweiligen seitlichen Flächen der Rippen des erfindungsgemäßen Brennwert-Wärmetauschers jeweils sehr gut erreichbar und dadurch auch leicht, beispielsweise durch Abwischen, reinigbar, sofern dies überhaupt notwendig sein sollte. In diesem Zusammenhang sei im Übrigen darauf hingewiesen, dass der erfindungsgemäße Brennwert-Wärmetauscher über eine Anzahl von im Wesentlichen parallel verlaufenden Rippen verfügt, die sich, jeweils voneinander beabstandet im Wesentlichen über die gesamte Breite des Wärmetauschers erstrecken, so dass eine maximale Wärmeaustauschfläche zur Verfügung gestellt ist.

Gemäß der Erfindung greifen die an der ersten Gehäuseseite und die an der zweiten Gehäuseseite angeordneten ersten und zweiten Rippen in montiertem Zustand des Gehäuses zumindest in einem Teilbereich, insbesondere ihrer Rippenhöhe, ineinander. Zu diesem Zweck sind die ersten Rippen und die zweiten Rippen zueinander versetzt und im Wesentlichen zueinander parallel verlaufend angeordnet.

Durch die Verzahnung der ersten und zweiten Rippen der jeweiligen Gehäuseseite, d.h. durch das Ineinandergreifen dieser Rippen, respektive der, in Bezug auf die beiden Gehäuseseiten, beiden Zick-Zack-Rippen-Hälften werden im zusammengebauten Zustand des erfindungsgemäßen Brennwert-Wärmetauschers die Abstände zwischen den dann jeweils benachbart angeordneten Rippen klein gehalten, was sich äußerst positiv auf die Effizienz des erfindungsgemäßen Brennwert-Wärmetauschers auswirkt. Im zerlegten Zustand des erfindungsgemäßen Brennwert-Wärmetauschers ergibt sich dann hingegen ein großer Abstand zwischen den jeweiligen Rippen einer Wärmetauscherhälfte, was zum einen äußerst vorteilhaft im Hinblick auf eine Gestaltung eines Gusswerkzeuges zur Herstellung des erfindungsgemäßen Brennwert-Wärmetauschers ist und darüber hinaus die Fertigung des erfindungsgemäßen Brennwert-Wärmetauschers generell vereinfacht. Zudem wird die Reinigung des erfindungsgemäßen Brennwert-Wärmetauschers durch die in auseinander gebauten Zustand des Wärmetauschers größeren Abstände der jeweiligen Rippen einer jeweiligen Seite deutlich vereinfacht, da die Rippen durch die Demontage der Hälften dann gut zugänglich sind und die großen Abstände zwischen den Rippen somit in vorteilhafter Weise eine einfache Reinigung der Oberfläche ermöglichen. Ein wichtiger Punkt der Erfindung besteht somit auch darin, dass der erfindungsgemäße Brennwert-Wärmetauscher in zwei annähernd gleich große Teile zerlegt werden kann, wodurch die abgasberührte Wärmetauscheroberfläche für eine Reinigung besonders gut zugänglich ist.

Gemäß einer alternativen Ausführungsform , die nicht Teil der Erfindung ist, können die ersten und die zweiten Rippen an der ersten und zweiten Gehäuseseite auch so angeordnet sein, dass ihre jeweiligen Rippenköpfe einander gegenüberstehen und sich gegebenenfalls berühren. In letzterem Fall, d.h. bei sich einander gegenüberstehenden Rippenköpfen, sind die Rippen erfindungsgemäß in einem geringeren Abstand zueinander angeordnet, während die Rippen einer ersten Gehäuseseite zueinander einen größeren Abstand aufweisen, wenn die Rippen der anderen, d.h. zweiten Gehäuseseite versetzt zu den Rippen der ersten Gehäuseseite angeordnet sind, da die ersten Rippen der ersten Gehäuseseite auf diese Weise optimal mit den zweiten Rippen der zweiten Gehäuseseite zumindest teilweise und zumindest abschnittsweise ineinandergreifen können, so dass ein Abstand zwischen den jeweiligen ersten Rippen der ersten Gehäuseseite und den jeweiligen zugeordneten zweiten Rippen der zweiten Gehäuseseite dann im Wesentlichen dem halben Abstand zwischen den einzelnen benachbarten Rippen der jeweiligen Gehäuseseite, abzüglich der Dickenerstreckung der jeweiligen Rippen, entspricht.

Wie vorerwähnt, weisen die Rippen einen innenwandungsseitig angeordneten Rippengrund, mit welchem die jeweiligen Rippen an der Innenwandung der jeweiligen Gehäuseseite angebracht sind und einen entgegengesetzt zum Rippengrund angeordneten Rippenkopf auf, wobei ein Abstand des Rippengrunds von dem Rippenkopf eine Rippenhöhe definiert. Diese Rippenhöhe liegt erfindungsgemäß im Bereich von 10 mm bis 80 mm, vorzugsweise im Bereich von 14 mm bis 65 mm und besonders bevorzugt im Bereich von 20 mm bis 50 mm, sofern die jeweiligen Rippen des erfindungsgemäßen Brennwert-Wärmetauschers an beiden Seiten des Gehäuses im Wesentlichen zu gleichen Teilen angeordnet sind und ineinandergreifen. Sofern die erfindungsgemäßen Rippen lediglich an einer Gehäuseseite vorhanden sind kann deren Rippenhöhe auch dem Doppelten der oben angegebenen Werte entsprechen. Des Weiteren kann die Rippenhöhe eines erfindungsgemäßen Brennwert-Wärmetauschers lediglich der Hälfte der oben angegebenen numerischen Werte entsprechen, wenn die Rippen quasi "auf Stoß", d.h. mit sich jeweils gegenüberliegenden Rippenköpfen angeordnet sind.

Des Weiteren liegt ein Abstand von ineinandergreifenden ersten und zweiten Rippen, jeweils senkrecht zur Rippenhöhe gemessen, im Wesentlichen im Bereich von 0,5 mm bis 15 mm, bevorzugt im Bereich von 0,65 mm bis 7,5 mm und besonders bevorzugt im Bereich von 0,8 mm bis 4 mm. Eine solche Anordnung ineinandergreifenden Rippen ermöglicht eine Zurverfügungstellung einer optimalen maximalen Wärmeaustauschfläche bei einer gleichzeitigen optimierten Durchströmbarkeit des Abgasströmungswegs.

Im Übrigen entspricht die Wellenform der Rippen erfindungsgemäß bevorzugt im Wesentlichen einer Sinusform, während jeweilige Schenkel der Zick-Zack-Form der Rippen erfindungsgemäß einen Winkel von im Wesentlichen 90° ± 30 %, vorzugsweise ± 20 %, und besonders bevorzugt ± 10 %, einschließen. Eine derartige Form der Rippen gewährleistet im Falle einer wellenförmigen Sinusform, aber auch im Falle einer Zick-Zack-Form, bei welcher die jeweils an einen winkelanliegenden Schenkel entsprechend den jeweils angegebenen Winkelangaben gegeneinander verkippt sind, ein optimales Ablaufen von Kondensat sowie darüber hinaus eine gute Reinigungsmöglichkeit.

Wie vorerwähnt, weisen sowohl die erste Gehäuseseite als auch die zweite Gehäuseseite jeweils einen Hohlraum zur Aufnahme, Leitung und/oder Führung eines Wärmetransferfluids, vorzugsweise Wasser, auf, mit welchem aus dem Abgas transferierte Wärme einer weiteren Verwendung zugeführt wird.

Gemäß einer weiteren Ausführungsform der Erfindung sind die erste Gehäuseseite und die zweite Gehäuseseite über wenigstens eine Schwenkvorrichtung, insbesondere über wenigstens ein Scharnier, miteinander verbunden. Eine solche Ausführungsform ermöglicht eine sehr schnelle Montage des erfindungsgemäßen Brennwert-Wärmetauschers, da die beiden Gehäuseseiten durch die sie verbindende Schwenkvorrichtung relativ zueinander angeordnet und definiert aufeinander zu und voneinander weg bewegt werden können. Die Schwenkvorrichtung kann hierbei mehrgelenkig ausgeführt sein, so dass die beiden Gehäuseseiten im Wesentlichen linear aufeinander zu und voneinander weg bewegt werden können, wobei sich die Rippen der jeweiligen Gehäuseseite in diesem Fall bevorzugt rechtwinklig von der jeweiligen Innenwandung der jeweiligen Gehäuseseite erstrecken. Alternativ hierzu können die beiden Gehäuseseiten auch über ein oder mehrere Scharniere miteinander verbunden sein, so dass die beiden Gehäuseseiten quasi auf- und zugeklappt werden können. In letzterem Fall können die Rippen, die an den jeweiligen Innenwandungen der beiden Gehäuseseiten angeordnet sind, schrägwinklig an diesen in den Wandungen angebracht sein, so dass die Rippen bei einem Zuklappen der beiden Gehäuseseiten, insbesondere ohne Verkanten, optimal miteinander in Eingriff kommen können.

Des Weiteren ist der erfindungsgemäße Brennwert-Wärmetauscher bevorzugt aus Metall, insbesondere aus einer Metalllegierung und besonders bevorzugt aus einer Aluminiumdruckgusslegierung, hergestellt, wobei alternativ auch zumindest nur die wärmeleitenden Teile des Brennwert-Wärmetauschers aus diesem/diesen Material(ien) bestehen können, was eine besonders gute Wärmeübertragung der thermischen Energie des Abgases an das Wärmetransferfluids gewährleistet.

Erfindungsgemäß wird somit ein Wärmetauscher vorgeschlagen, auf dessen abgasberührter Oberfläche durchgängige Rippen in Strömungsrichtung ausgeprägt sind. Um den Wirkungsgrad bei praktikablen Höhen des Wärmetauschers zu steigern, sind diese Rippen in Wellen- oder Zick-Zack-Form ausgeführt.

Der erfindungsgemäße Brennwert-Wärmetauscher ist zweiteilig, wobei beide Seiten des Gehäuses des erfindungsgemäßen Brennwert-Wärmetauschers wasserführend sind und die beiden Hälften relativ zueinander geöffnet werden können, um abgasseitig berührte Flächen zu reinigen, wobei auf der abgasberührten Wärmetauscheroberfläche Wellen- und/oder Zick-Zack-Rippen angebracht sind, welche bei Zusammenfügen der beiden Wärmetauscherhälften bevorzugt ineinandergreifen.

Durch die durchgängigen Rippen in Strömungsrichtung kann im Betrieb des Brennwert-Wärmetauschers entstehendes Kondensat definiert von oben nach unten, d.h. in Schwerkraftrichtung und in Abgasströmungsrichtung, ablaufen, wodurch die Verweildauer von saurem Kondensat auf der Wärmetauscheroberfläche minimiert ist.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Darstellung einer Perspektivansicht eines erfindungsgemäßen Brennwert-Wärmetauschers gemäß einer ersten Ausführungsform mit einer nach oben offenen Brennkammer;
- Fig. 2: eine schematische Darstellung einer Seitenansicht des in Fig. 1 dargestellten Brennwert-Wärmetauschers;
- Fig. 3: eine schematische Darstellung einer Explosionsansicht des in Fig. 1 dargestellten Brennwert-Wärmetauschers;
- Fig. 4: eine schematische Darstellung eines erfindungsgemäßen Brennwert-Wärmetauschers gemäß einer weiteren Ausführungsform in einer Ansicht von oben mit geöffneter Brenneraufnahme; und
- Fig. 5: eine schematische Darstellung einer Innenansicht einer Gehäusehälfte eines erfindungsgemäßen Brennwert-Wärmetauschers in Aufsicht.

In der nachfolgenden Beschreibung werden für gleiche und gleich wirkende Teile dieselben Bezugsziffern verwendet.

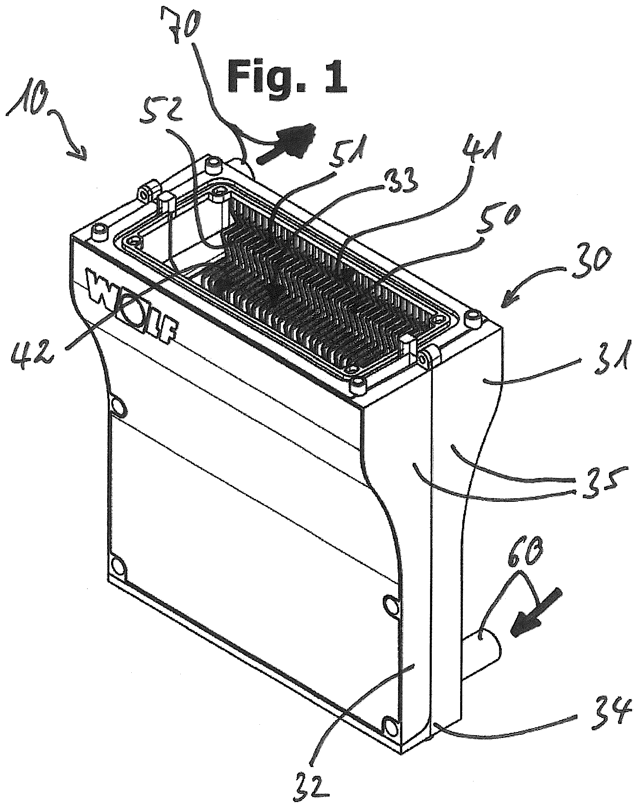

Fig. 1 zeigt eine schematische Darstellung einer Perspektivansicht eines fertig montierten erfindungsgemäßen Brennwert-Wärmetauschers 10 gemäß einer ersten Ausführungsform mit einer nach oben offenen Brennkammer. Der erfindungsgemäß Brennwert-Wärmetauscher 10 weist ein Gehäuse 30 mit einer ersten Gehäuseseite 31 und eine zweiten Gehäuseseite 32 auf, die jeweils an ihrer jeweiligen Innenwandung 41, 42 Rippen 50 aufweisen, die sich von der jeweiligen Innenwandung 41, 42 der jeweiligen ersten 31 und zweiten Gehäuseseite 32 von beiden Seiten sich einander gegenüberliegend in einen Abgasströmungsweg 20 hinein erstrecken. Der Abgasströmungsweg 20 erstreckt sich in im Wesentlichen vertikaler Richtung, respektive in Schwerkraftrichtung, von einem in dem erfindungsgemäßen Brennwert-Wärmetauscher 10 oben angeordneten Brennerabschnitt 33 zu einem in dem erfindungsgemäßen Brennwert-Wärmetauscher 10 unten angeordneten Kondensatwannenabschnitt 34. Die an den jeweiligen Innenwandungen 41, 42 der beiden Gehäuseseiten angeordneten Rippen 50 sind jeweils an diesen Innenwandungen 41, 42 angebracht und erstrecken sich von diesen Innenwandungen 41, 42 in etwa in einem rechten Winkel in Richtung Abgasströmungsweg 20, in welchem sie sich in im Wesentlichen vertikaler Richtung, d.h. dem Abgasströmungsweg 20 folgend und jeweils zueinander parallel verlaufend von dem Brennerabschnitt 33 in Richtung Kondensatwannenabschnitt 34 erstrecken. Des Weiteren zeigt Fig. 1 in schematischer Andeutung einen jeweiligen Anschlussstutzen für einen Rücklauf 60 und einen Vorlauf 70, wobei die in Fig. 1 angedeuteten Pfeile 60, 70 die jeweilige Flussrichtung des Wärmetransferfluids, welches im Betrieb durch den erfindungsgemäßen Brennwert-Wärmetauscher 10 strömt, angeben.

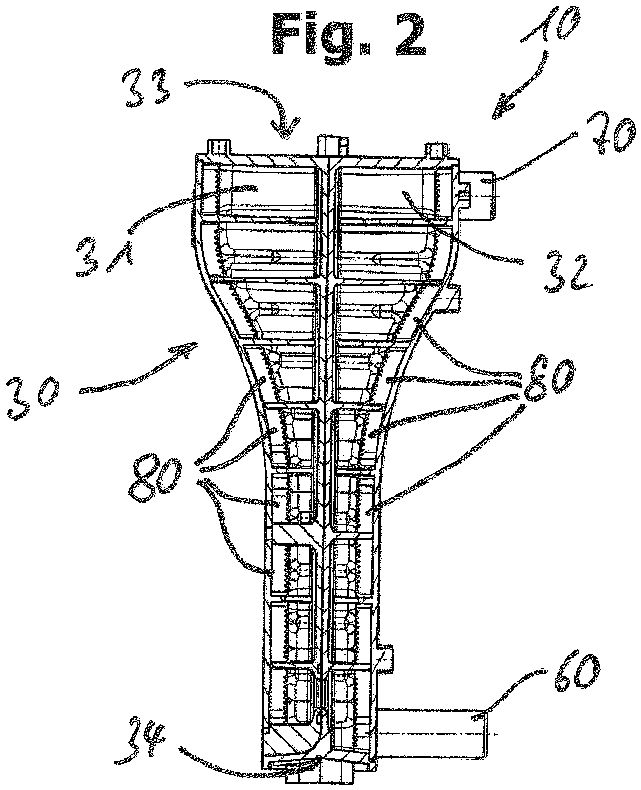

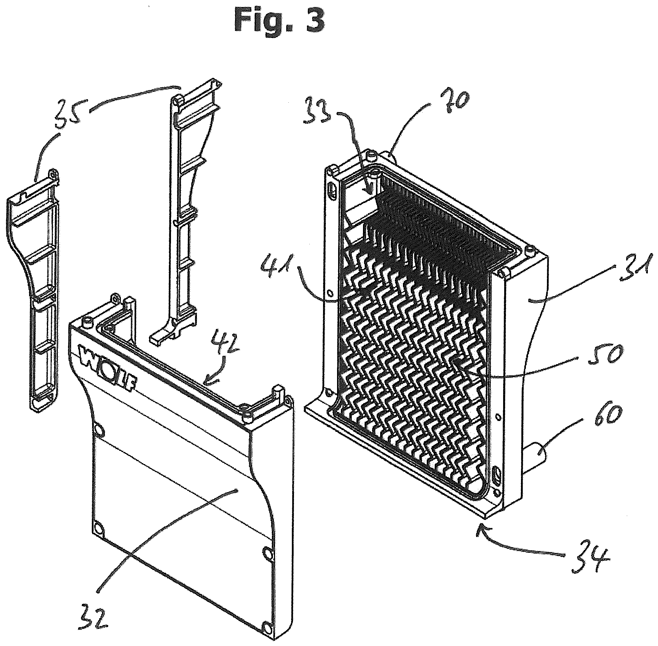

Fig. 2 zeigt eine schematische Darstellung einer Seitenansicht des in Fig. 1 dargestellten Brennwert-Wärmetauschers 10 ohne die jeweiligen seitlichen Deckelbleche 35, die insbesondere den Fig. 3 gut erkennbar sind. Des Weiteren ist in Fig. 2 ein das Wärmetransferfluid, nämlich im vorliegenden Fall Wasser, führender in dem erfindungsgemäßen Brennwert-Wärmetauscher 10 in beiden Gehäuseseiten 31, 32 vorgesehene Hohlraum 80 dargestellt.

Fig. 3 zeigt eine schematische Darstellung einer Explosionsansicht des in Fig. 1 dargestellten Brennwert-Wärmetauschers 10, wobei die beiden Gehäuseseiten 31, 32 sowie die diesen beiden Gehäuseseiten einen 30, 32 zugeordneten Deckelbleche 35 gut zu erkennen sind. Des Weiteren sind an der Innenwandung 41 der ersten Gehäuseseite 31 die sich vom Brennerabschnitt 33 in Richtung Kondensatwannenabschnitt 34 angeordneten Rippen 50 mit ihrer durchgängigen Zick-Zack-Form gut erkennbar.

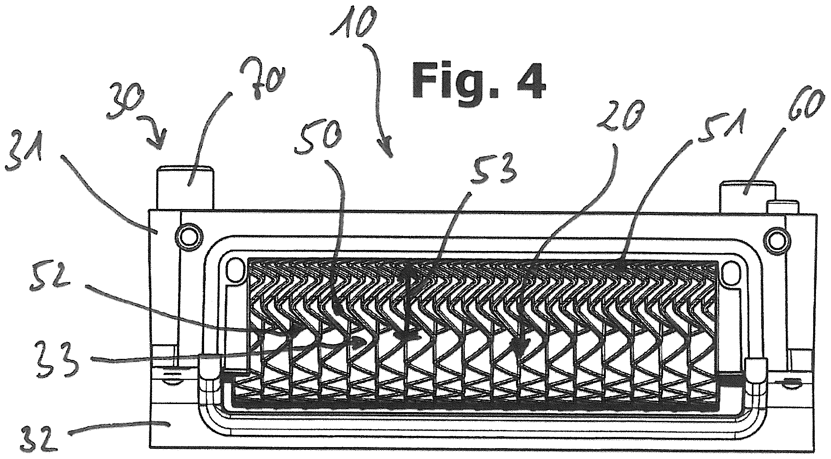

Fig. 4 zeigt eine schematische Darstellung eines erfindungsgemäßen Brennwert-Wärmetauschers 10 gemäß einer weiteren erfindungsgemäßen Ausführungsform in einer Ansicht von oben mit geöffneter Brenneraufnahme, was die sich wellen- bzw. zick-zack-förmig verlaufenden Rippen 50 besonders gut erkennen lässt. Die Rippen 50 weisen ihrerseits eine Rippenhöhe 53 von 35 mm auf, die sich von einem Rippengrund 51 zu einem Rippenkopf 52 bemisst. Die Rippen 50 erstrecken sich auf beiden Gehäuseseiten einer 30, 32 des Gehäuses 30 des Brennwert-Wärmetauschers 10 in im Wesentlichen paralleler Anordnung zueinander über die gesamte Breite des erfindungsgemäßen Brennwert-Wärmetauschers 10, wobei die Rippen 50 der beiden Gehäuseseiten ein 30, 32 in zusammengebautem Zustand des Brennwert-Wärmetauschers 10 gemäß Fig. 4 mit ihren jeweiligen Rippenköpfen 52 zueinander ausgerichtet und beabstandet zueinander angeordnet sind.

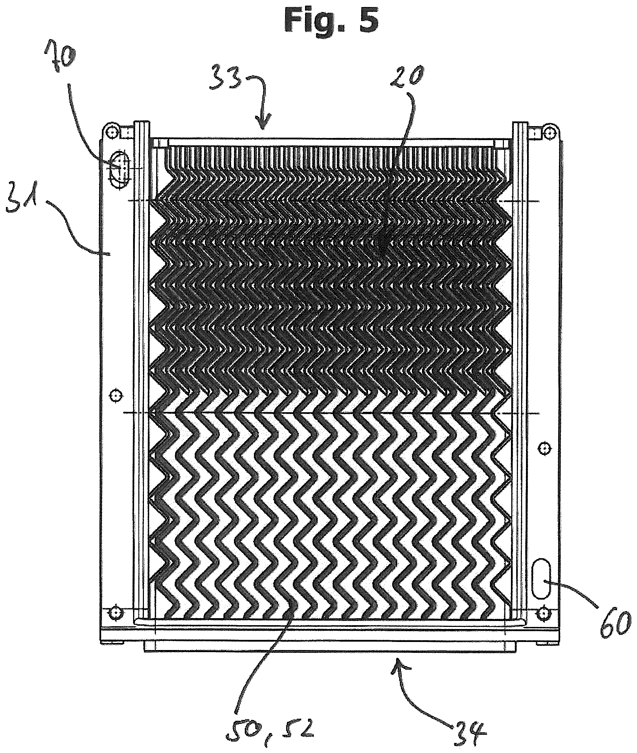

Fig. 5 zeigt eine schematische Darstellung einer Innenansicht einer Gehäusehälfte eines erfindungsgemäßen Brennwert-Wärmetauschers 10 in Aufsicht, wobei die Innenwandung 41 der ersten Gehäuseseite 31 dargestellt ist. Gemäß dieser in Fig. 5 gezeigten Darstellung sind die wellen- bzw. zick-zack-förmig von dem Brennerabschnitt 33 zu dem Kondensatwannenabschnitt 34 verlaufenden Rippen 50 mit ihren aus der Zeichenebene ragenden jeweiligen Rippenköpfen 52 besonders gut erkennbar. Die jeweiligen Schenkel der zick-zack-förmig verlaufenden Rippen 50 schließen zueinander einen Winkel von im Wesentlichen 90° ein. Die innere Kontur der ersten Gehäuseseite 31 ist an die Wellen- bzw. Zick-Zack-Form der Rippen 50 angepasst.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Brennwert-Wärmetauscher
- 20: Abgasströmungsweg
- 30: Gehäuse
- 31: erste Gehäuseseite
- 32: zweite Gehäuseseite
- 33: Brennerabschnitt
- 34: Kondensatwannenabschnitt
- 35: Deckelblech
- 41: Innenwandung der ersten Gehäuseseite
- 42: Innenwandung der zweiten Gehäuseseite
- 50: Rippen
- 51: Rippengrund
- 52: Rippenkopf
- 53: Rippenhöhe
- 60: Rücklauf
- 70: Vorlauf
- 80: Hohlraum

## Patentansprüche

1. Brennwert-Wärmetauscher (10) mit einem einen Abgasströmungsweg (20) definierenden Gehäuse (30), wobei der Abgasströmungsweg (20) entlang eines Innenabschnitts des Gehäuses (30) in im Wesentlichen vertikaler Richtung verläuft, wobei sich entlang des Abgasströmungswegs (20) ausgehend von einer Innenwandung des Gehäuses (20) Rippen (50), die gleichsinning mit dem Abgasströmungsweg verlaufen, in den Abgasströmungsweg (20) hinein erstrecken, die, insbesondere über im Wesentlichen die gesamte Länge des Abgasströmungswegs (20), insbesondere von einem Brennerabschnitt (33) des Gehäuses (30) bis zu einem Kondensatwannenabschnitt (34), im Wesentlichen wellen- und/oder zick-zack-förmig verlaufen,
**dadurch gekennzeichnet, dass**
das Gehäuse (30) zweiteilig ausgebildet ist, wobei eine Innenwandung (41) einer ersten Gehäuseseite (31) in montiertem Zustand des Gehäuses (30) einer Innenwandung (42) einer zweiten Gehäuseseite (32) gegenüberliegend angeordnet ist, wobei die erste Gehäuseseite (31) erste Rippen (51) und die zweite Gehäuseseite (32) zweite Rippen (52) aufweist, die in montiertem Zustand des Gehäuses (30) zueinander versetzt und vorzugsweise im Wesentlichen parallel zueinander verlaufend, angeordnet sind und wobei die an der ersten Gehäuseseite (31) und die an der zweiten Gehäuseseite (32) angeordneten ersten (51) und zweiten Rippen (52) in montiertem Zustand des Gehäuses (30) ineinander greifen.

2. Brennwert-Wärmetauscher nach Anspruch 1,
**dadurch gekennzeichnet, dass**
die Rippen (50, 51, 52) einen innenwandungsseitig angeordneten Rippengrund (51) und einen entgegengesetzt zum Rippengrund (51) angeordneten Rippenkopf (52) aufweisen, wobei ein Abstand des Rippengrunds (51) von dem Rippenkopf (52) eine Rippenhöhe (53) definiert, die im Bereich von 10 mm bis 80 mm, vorzugsweise im Bereich von 14 mm bis 65 mm und besonders bevorzugt im Bereich von 20 mm bis 50 mm, liegt.

3. Brennwert-Wärmetauscher nach einem der vorhergehenden Ansprüche,
**dadurch gekennzeichnet, dass**
ein Abstand von ineinander greifenden ersten (51) und zweiten Rippen (52) senkrecht zur Rippenhöhe im Wesentlichen im Bereich von 0,5 mm bis 15 mm, bevorzugt im Bereich von 0,65 mm bis 7,5 mm und besonders bevorzugt im Bereich von 0,8 mm bis 4 mm liegt.

4. Brennwert-Wärmetauscher nach einem der vorhergehenden Ansprüche,
**dadurch gekennzeichnet, dass**
die Wellenform der Rippen (50, 51, 52) im Wesentlichen einer Sinusform entspricht und jeweilige Schenkel der Zick-Zack-Form der Rippen (50, 51, 52) einen Winkel von im Wesentlichen 90° ± 30 %, vorzugsweise ± 20 %, und besonders bevorzugt ± 10 %, einschließen.

5. Brennwert-Wärmetauscher nach einem der vorhergehenden Ansprüche,
**dadurch gekennzeichnet, dass**
die erste Gehäuseseite (31) und die zweite Gehäuseseite (32) jeweils einen Hohlraum (35) zur Aufnahme, Leitung und/oder Führung eines Wärmetransferfluids, vorzugsweise Wasser, aufweisen.

6. Brennwert-Wärmetauscher nach einem der vorhergehenden Ansprüche,
**dadurch gekennzeichnet, dass**
die erste Gehäuseseite (31) und die zweite Gehäuseseite (32) über wenigstens eine Schwenkvorrichtung, insbesondere über wenigstens ein Scharnier, miteinander verbunden sind.

7. Brennwert-Wärmetauscher nach einem der vorhergehenden Ansprüche,
**dadurch gekennzeichnet, dass**
der Brennwert-Wärmetauscher (10) aus Metall, insbesondere aus einer Metalllegierung und besonders bevorzugt aus einer Aluminiumdruckgusslegierung, hergestellt ist oder zumindest wärmeleitende Teile des Brennwert-Wärmetauschers (10) aus diesem/diesen Material(ien) bestehen.

## Claims

1. Caloric value heat exchanger (10) with a housing (30), defining an exhaust gas flow path (20), wherein the exhaust gas flow path (20) runs along an inner section of the housing (30), in an essentially vertical direction, wherein, along the exhaust gas flow path (20), emanating from an inner wall of the housing (30), ribs extend into the exhaust gas flow path (20), running in the same direction with the exhaust gas flow path (20), that, in particular over essentially the entire length of the exhaust gas flow path (20), in particular from a burner section (33) of the housing (30) to a condensing basin section (34), essentially along a wave- and/or zig-zag pattern, **characterized by**
the housing (30) being formed in two parts, wherein an inner wall (41) of a first housing side (31) in the assembled state of the housing (30) is arranged opposite an inner wall (42) of a second housing side (32), wherein the first housing side (31) has first ribs (51) and the second housing side (32) having second ribs (52) which, in the assembled state of the housing (30) are offset from, preferably parallel, to one another, and wherein the first ribs (51) arranged on the first housing side (31) and the second ribs (52) arranged on the second housing side interlock with one another in the assembled state of the housing (30).

2. Caloric value heat exchanger (10) according to claim 1, **characterized in that** the ribs (50, 51, 52) comprise a rib-base (51), arranged towards the inner wall (42), and a rib-head (52) arranged opposite the rib-base (51), wherein a distance between the rib-base (51) and the rib-head (52) defines a rib-height (53), the rib-height (53) lying in a region of 10mm to 80mm, preferably a region of 14mm to 65mm, further preferably 20mm to 50mm.

3. Caloric value heat exchanger (10) according to one of the preceding claims, **characterized in that** a distance between interlocking first (51) and second (52) ribs, orthogonal to the rib-height (53) essentially lies in a region of 0.5mm to 15mm, preferably 0.65mm to 7.5mm and further preferably 0.8mm to 4mm.

4. Caloric value heat exchanger (10) according to one of the preceding claims, **characterized in that** the wave pattern of the ribs (50, 51, 52) is essentially sinusoidal in shape and the corresponding legs of the zig-zag pattern of the ribs (50, 51, 52) essentially form an angle of 90°± 30%, preferably ± 20%, further preferably ± 10%.

5. Caloric value heat exchanger (10) according to one of the preceding claims, **characterized in that** the first housing side (31) and the second housing side (32) each comprise a cavity (35) for the acceptance, direction and/or guidance of a heat-transport fluid, preferably water.

6. Caloric value heat exchanger (10) according to one of the preceding claims, **characterized in that** the first housing side (31) and the second housing side (32) are connected with one another through at least one pivoting device, preferably a hinge.

7. Caloric value heat exchanger (10) according to one of the preceding claims, **characterized in that** the caloric value heat exchanger (10) is made from metal, in particular an alloy, and further preferably from die cast aluminum alloy, or at least parts of the Caloric value heat exchanger (10) are made from this/these material(s).

## Revendications

1. Échangeur de chaleur à condensation (10) avec une cuve (30) définissant un trajet de circulation des gaz de combustion (20), dans lequel le trajet de circulation des gaz de combustion (20) passe le long d'une partie intérieure de la cuve (30) dans un sens sensiblement vertical, dans lequel des nervures (50) orientées dans le même sens que le trajet de circulation des gaz de combustion s'étendent le long du trajet de circulation des gaz de combustion (20) à partir d'une paroi intérieure de la cuve (20), s'étendent dans le trajet de circulation des gaz de combustion (20) et suivent un trajet sensiblement ondulé et/ou en zigzag, en particulier sur sensiblement toute la longueur du trajet de circulation des gaz de combustion (20), en particulier d'une section de brûleur (33) de la cuve (30) à une section de bac de condensat (34),
**caractérisé en ce que** la cuve (30) est construite en deux parties, une paroi intérieure (41) d'un premier côté de la cuve (31) étant disposée, dans l'état assemblé de la cuve (30), en face d'une paroi intérieure (42) d'un deuxième côté de la cuve (32), le premier côté de la cuve (31) présentant des premières nervures (51) et le deuxième côté de la cuve (32) des deuxièmes nervures (52), qui sont décalées les unes par rapport aux autres dans l'état assemblé de la cuve (30) et sont de préférence disposées parallèlement les unes aux autres, et les premières (51) et deuxièmes nervures (52) disposées sur le premier côté de la cuve (31) et sur le deuxième côté de la cuve (32) se mettant en prise les unes dans les autres dans l'état assemblé de la cuve (30).

2. Échangeur de chaleur à condensation selon la revendication 1, **caractérisé en ce que** les nervures (50, 51, 52) présentent un fond de nervure (51) disposé du côté de la paroi intérieure et un sommet de nervure (52) disposé du côté opposé au fond de nervure (51), une distance entre le fond de nervure (51) et le sommet de nervure (52) définissant une hauteur de nervure (53) qui est comprise entre 10 mm et 80 mm, de préférence entre 14 mm et 65 mm et en particulier entre 20 mm et 50 mm.

3. Échangeur de chaleur à condensation selon l'une des revendications précédentes, **caractérisé en ce que** la distance, perpendiculairement à la hauteur de nervure, entre des premières (51) et deuxièmes nervures (52) qui se mettent en prise les unes dans les autres est sensiblement comprise entre 0,5 mm et 15 mm, de préférence entre 0,65 mm et 7,5 mm et en particulier entre 0,8 mm et 4 mm.

4. Échangeur de chaleur à condensation selon l'une des revendications précédentes, **caractérisé en ce que** la forme ondulée des nervures (50, 51, 52) est sensiblement sinusoïdale et les bras de la forme en zigzag des nervures (50, 51, 52) forment entre eux un angle de sensiblement 90° ± 30 %, de préférence ± 20 %, en particulier ± 10 %.

5. Échangeur de chaleur à condensation selon l'une des revendications précédentes, **caractérisé en ce que** le premier côté de la cuve (31) et le deuxième côté de la cuve (32) présentent chacun une cavité (35) pour recevoir, conduire et/ou guider un fluide d'échange thermique, de préférence de l'eau.

6. Échangeur de chaleur à condensation selon l'une des revendications précédentes, **caractérisé en ce que** le premier côté de la cuve (31) et le deuxième côté de la cuve (32) sont reliés entre eux par au moins un mécanisme pivotant, en particulier par au moins une charnière.

7. Échangeur de chaleur à condensation selon l'une des revendications précédentes, **caractérisé en ce que** l'échangeur de chaleur à condensation (10) est fait de métal, en particulier d'un alliage de métal et de préférence d'un alliage d'aluminium moulé sous pression, ou bien les parties conduisant la chaleur de l'échangeur de chaleur à condensation (10), au minimum, se composent de ce ou ces matériaux.
